# EUROPEAN PATENT SPECIFICATION

(11) **EP 3 629 730 B1**
(45) Date of publication and mention of the grant of the patent: **04.12.2024**
(21) Application number: 18730593.3
(22) Date of filing: 23.05.2018
(51) Int. Cl.: A01N 25/04, A01N 25/10, C09K 17/22, A01G 24/35

(54) **GROWTH MEDIA COMPOSITIONS**
ZUSAMMENSETZUNGEN FÜR WACHSTUMSMEDIEN
COMPOSITIONS DE MEDIA DE CROISSANCE

(30) Priority: 24.05.2017 US 201762510531 P
(43) Date of publication of application: 08.04.2020
(73) Proprietor: Dow Global Technologies LLC, Midland, MI 48674 (US); Rohm and Haas Company, Philadelphia, PA 19106 (US)
(72) Inventor: GANAPATIBHOTLA, Lalitha V., Lake Jackson Texas 77566 (US); IZMITLI, Aslin, Collegeville Pennsylvania 19426 (US); SAUCY, Daniel A., Collegeville Pennsylvania 19426 (US); YU, Wanglin, Lake Jackson Texas 77566 (US)
(74) Representative: Beck Greener LLP
(86) International application number: PCT/US2018/034044
(87) International publication number: WO 2018/217841

(56) References cited:
- EP-A1- 0 122 797
- EP-A1- 2 450 410
- EP-A2- 0 101 253
- EP-A2- 1 247 444
- WO-A1-03/000621
- WO-A1-83/00498
- WO-A2-2006/026406
- GB-A- 1 591 415
- US-A- 4 051 630
- US-A- 4 227 911
- US-A- 4 540 427
- MICHAEL S. JOHNSON: "The effects of gel-forming polyacrylamides on moisture storage in sandy soils", JOURNAL OF THE SCIENCE OF FOOD AND AGRICULTURE, vol. 35, no. 11, 1 November 1984 (1984-11-01), GB, pages 1196 - 1200, XP055497403, ISSN: 0022-5142, DOI: 10.1002/jsfa.2740351110
- RABAT NURUL EKMI ET AL: "Effect of Different Monomers on Water Retention Properties of Slow Release Fertilizer Hydrogel", PROCEDIA ENGINEERING, ELSEVIER, AMSTERDAM, NL, vol. 148, 12 July 2016 (2016-07-12), pages 201 - 207, XP029637788, ISSN: 1877-7058, DOI: 10.1016/J.PROENG.2016.06.573
- SHAUKAT ALI SHAHID ET AL: "Improvement in the Water Retention Characteristics of Sandy Loam Soil Using a Newly Synthesized Poly(acrylamide-co-acrylic Acid)/AlZnFe2O4 Superabsorbent Hydrogel Nanocomposite Material", MOLECULES, vol. 17, no. 8, 3 August 2012 (2012-08-03), pages 9397 - 9412, XP055497400, DOI: 10.3390/molecules17089397
- DATABASE WPI Week 201561, Derwent World Patents Index; AN 2015-514813, XP002783643
- DATABASE WPI Week 201640, Derwent World Patents Index; AN 2016-26047V, XP002783644
- D T DAVIDSON: "Soil Stabilisation with Chemicals", 18 May 1962 (1962-05-18), Ames, Iowa, U.S.A., pages 1 - 347, XP055497634, Retrieved from the Internet <URL:http://publications.iowa.gov/22154/1/IADOT_IHRB_Bulletin_22_Soil_Stabilization_Chemicals_1960.pdf> [retrieved on 20180806]
- .: "ACULYN(TM) 28 Rheology Modifier/Stabilizer", 1 January 2006 (2006-01-01), pages 1 - 11, XP055497602, Retrieved from the Internet <URL:https://www.dow.com/assets/attachments/business/pcare/aculyn/aculyn_28/tds/aculyn_28.pdf> [retrieved on 20180806]
- DATABASE WPI Week 197703, Derwent World Patents Index; AN 1977-04643Y, XP002783645
- DATABASE WPI Week 200011, Derwent World Patents Index; AN 2000-119403, XP002783646
- DOW: "ACRYSOL(TM) Rheology Modifiers", 1 October 2013 (2013-10-01), Switzerland, pages 1 - 16, XP055498200, Retrieved from the Internet <URL:http://msdssearch.dow.com/PublishedLiteratureDOWCOM/dh_08f8/0901b803808f8b0d.pdf?filepath=coatings/pdfs/noreg/884-00076.pdf&fromPage=GetDoc> [retrieved on 20180808]

## Description

### Field of Disclosure

Embodiments of the present disclosure are directed towards growth media compositions and methods of forming growth media compositions, more specifically, embodiments are directed towards growth media compositions including a growth media and solids from a dispersion of acrylic copolymer.

### Background

Growth media may be utilized for plants to germinate, grow, and/or remain viable. There is continued focus in the industry on developing new and improved materials and/or methods that may be utilized with growth media.

EP 1 247 444 (Degussa) discloses the use of an aqueous composition comprising the acrylamide/ acrylic acid copolymer Stockosorb^{®} AGRO in a method of amending soil by injection in order to improve water retention.

### Summary

The present disclosure provides aqueous compositions including agricultural water, and a dispersion of acrylic copolymer, as set out in the claims.

The present disclosure provides growth media compositions including a growth media and solids from the aqueous composition, as set out in the claims.

The present disclosure provides methods including combining a dispersion of acrylic copolymer and agricultural water to form an aqueous composition, and applying the aqueous composition to a growth media, as set out in the claims.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Detailed Description

Growth media compositions and methods of forming growth media compositions are disclosed herein. As used herein "growth media compositions" are 80265-EP-EPT (1402.1370011) | P20954EP-W | EP18730593.3 | Amended Description Feb 2024 compositions including a growth media and solids from a dispersion of acrylic copolymer.

Aqueous compositions comprising the solids from a dispersion of acrylic copolymer according to the invention and the growth media compositions are defined in the appended claims.

Embodiments of the present disclosure can provide an advantageously improved, e.g., increased, water retention, as compared to other compositions. Embodiments of the present disclosure provide that the dispersion of acrylic copolymer may be contacted, e.g. combined and/or applied to, with a growth media. The dispersion of acrylic copolymer is combined with agricultural water to form an aqueous composition that can be applied to the growth media. Once applied to the growth media, solids from the dispersion of acrylic copolymer may then help to retain water and/or nutrients in the growth media. Retaining water and/or nutrients in the growth media may help plants germinate, grow, and/or remain viable.

Embodiments of the present disclosure may advantageously provide an improved, e.g., reduced, growth media hardness, as compared to growth media not including solids from a dispersion of acrylic copolymer. A reduced growth media hardness may provide more favorable conditions for plant root growth, for instance.

Embodiments of the present disclosure may advantageously provide an improved, e.g., reduced, growth media surface crusting, as compared to growth media not including solids from a dispersion of acrylic copolymer. A reduced surface crusting may provide more favorable conditions for plant germination, growth, and/or viability. Also, a reduced surface crusting may provide for improved growth media maintenance, e.g., tilling.

Embodiments of the present disclosure may advantageously provide an improved, e.g., increased, holding of growth media fines, as compared to growth media not including solids from a dispersion of acrylic copolymer. Increasing the holding of growth media fines, which may be referred to as fixing growth media particles, may help to reduce erosion.

The dispersions of acrylic copolymer include a copolymer. Embodiments of the present disclosure provide that the copolymer can be a linear copolymer, a branched copolymer, a crosslinked copolymer, or a combination thereof. Embodiments of the present disclosure provide that the copolymer can be a random copolymer. The copolymer includes structural units of monomers. As used herein, the term "structural units" refers to the remnant of the indicated monomer; thus a structural unit of ethyl acrylate is illustrated: 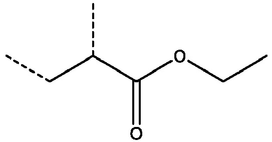 where the dotted lines represent points of attachment to the copolymer.

The copolymer includes structural units derived from an acrylic acid monomer and an acrylic ester monomer. The copolymer includes structural units derived from a macromolecular group. As used herein "acrylic" refers to ethylenically unsaturated, e.g., acrylic includes methacrylic.

As mentioned, the copolymer includes structural units derived from an acrylic acid monomer. The acrylic acid monomeris selected from the group consisting of itaconic acid, fumaric acid, crotonic acid, acrylic acid, methacrylic acid, maleic acid, acryloxypropionic acid, citraconic acid, and combinations thereof, or is a mono-ethylenically unsaturated carboxylic acid monomer.

The copolymer can include from 30 weight percent to 75 weight percent of structural units derived from the acrylic acid monomer, based upon a total weight of the copolymer. All individual values and subranges from 30 weight percent to 75 weight percent are included; for example, the structural units derived from the acrylic acid monomer can be from a lower limit of 30, 32, or 35 weight percent to an upper limit of 75, 70, or 65 weight percent based upon the total weight of the copolymer.

The copolymer includes structural units derived from an acrylic ester monomer. The acrylic ester monomer is selected from the group consisting of esters of 2-propenoic acid, 2-methylpropenoic acid, and combinations thereof, or from the group consisting of Ci-Cs alkyl acrylates and/or C₁-C₈ akyl methacrylates, such as methyl acrylate, ethyl acrylate, butyl acrylate, 2-ethylhexyl acrylate, methyl methacrylate, ethyl methacrylate, butyl methacrylate, and combinations thereof.

The copolymer can include from 25 weight percent to 70 weight percent of structural units derived from the acrylic ester monomer, based upon a total weight of the copolymer. All individual values and subranges from 25 weight percent to 70 weight percent are included; for example, the structural units derived from the acrylic ester monomer can be from a lower limit of 25, 28, or 30 weight percent to an upper limit of 70, 60, or 50 weight percent based upon the total weight of the copolymer.

The copolymer can include structural units derived from a vinylically unsaturated monomer. Examples of vinylically unsaturated monomers include, but are not limited to vinyl acetate, styrene, methylstyrene, diisobutylene, vinylpyrrolidone, vinylcaprolactame, and combinations thereof.

When the vinylically unsaturated monomer is utilized, the copolymer can include up to 20 weight percent of structural units derived from the vinylically unsaturated monomer, based upon the total weight of the copolymer. For instance, the structural units derived from the vinylically unsaturated monomer can be from a lower limit of 0.5, 1.0, or 3.0 weight percent to an upper limit of 20, 17, or 15 weight percent based upon the total weight of the copolymer.

The copolymer includes structural units, e.g., as a side chain, derived from a macromolecular group. The macromolecular group may be an alkoxylated ester and/or a urethane, for instance. The macromolecular group can include structural units of an ethylenically unsaturated alkyleneoxide macromonomer modified with an alkyl and/or aralkyl group.

The present disclosure provides that the macromolecular group is represented by either of the following structures:

R^{a}-(OR^{b})ₓ-(OR^{c})_{y}-OC(O)-CR^{d}=CH₂

or

R^{a}-(OR^{b})ₓ-(OR^{c})_{y}-OC(O)-NH-C(CH₃)₂-(Ph)-CR^{d}=CH₂

where R^{a} is a C₈-C₂₄ alkyl or aralkyl group; x + y is 3 to 100; R^{b} and R^{c} are each independently CH₂CH₂, CH₂CH(CH₃), or CH₂CH₂CH₂CH₂; R^{d} is H or C₁-C₆-alkyl; and Ph is a phenylene group. In one or more embodiments, x + y is 10 to 50. In one or more embodiments, x + y is 10 to 100. In one or more embodiments, x + y is 3 to 100. In one or more embodiments, R^{b} and R^{c} are both CH₂CH₂. In one or more embodiments, R^{d} is methyl.

Some embodiments of the present disclosure provide that the macromolecular group may be represented by either of the following structures:

R^{a}-(OCH₂CH₂)_{(z)}-OC(O)-C(CH₃)=CH₂

or

R^{a}-(OCH₂CH₂)_{(z)}-OC(O)-NH-C(CH₃)₂-(Ph)-C(CH₃)=CH₂

where R^{a} is a C₈-C₂₄ alkyl or aralkyl group; z is 3 to 50; and Ph is a phenylene group.

As used herein "macromolecular" refers to a group having a molecular weight from 200 daltons to 7,000 daltons. All individual values and subranges from 200 daltons to 7,000 daltons are included; for example, the macromolecular group may have a molecular weight from a lower limit of 200, 225, or 250 daltons to an upper limit of 7,000, 6,750, or 6,500 daltons.

Some embodiments of the present disclosure provide that the macromolecular group, e.g., a portion thereof, such as R^{a}-O discussed above, may be hydrophobic. As used herein "hydrophobic" refers to the macromolecular group having a cLogP value from 3.5 to 20.0. The cLogP value may be determined using ChemBioDraw Ultra 13.0, available from PerkinElmer, which uses a chemical fragment algorithm to assess the octanol/water partition coefficient of a molecule and/or fragment based upon its constituent parts. All individual values and subranges from 3.5 to 20.0 are included; for example, the macromolecular group may have a cLogP value from a lower limit of 3.5, 3.7, or 4.0 to an upper limit of 20.0, 19.0, or 18.0.

The copolymer can include from 0.1 weight percent to 15 weight percent of structural units derived from the macromolecular group, based upon a total weight of the copolymer. All individual values and subranges from 0.1 weight percent to 15 weight percent are included; for example, the structural units derived from the macromolecular group can be from a lower limit of 0.1, 0.5, or 1 weight percent to an upper limit of 15, 10, or 5 weight percent based upon the total weight of the copolymer.

Some embodiments of the present disclosure provide that a chain transfer agent may be utilized in forming the dispersion of acrylic copolymer. Examples of the chain transfer agent include, but are not limited to, hydroxyethyl mercaptan, β-mercaptopropionic acid, C₄-C₂₂-alkylmercaptans, such as n-dodecylmercaptan, and combinations thereof. The chain transfer agent may be utilized to help control the molecular weight of the copolymer. The chain transfer agent may be utilized from 0.05 weight percent to 5 weight percent based upon a total weight of the acrylic acid monomer and the acrylic ester monomer utilized to form the copolymer. All individual values and subranges from 0.05 weight percent to 5 weight percent are included; for example, the chain transfer agent may be utilized from a lower limit of 0.05, 0.1, or 0.5 weight percent to an upper limit of 5, 4.5, or 4 weight percent based upon the total weight of the acrylic acid monomer and the acrylic ester monomer utilized to form the copolymer.

Embodiments of the present disclosure provide that the copolymer has a weight average molecular weight (M_{w}) from 10,000 to 3,000,000 Daltons. All individual values and subranges from 10,000 to 3,000,000 Daltons are included; for example, the copolymer may have a M_{w} from a lower limit of 10,000, 25,000, or 50,000 to an upper limit of 3,000,000, 2,500,000, or 2,000,000 Daltons.

Embodiments of the present disclosure provide that the dispersion of the copolymer has an average particle diameter from 30 nanometers to 10 microns. All individual values and subranges from 30 nanometers to 10 microns are included; for example, the copolymer may have an average particle diameter from a lower limit of 30, 40, or 50 nanometers to an upper limit 10, 5, or 2 microns.

Some embodiments of the present disclosure provide that a cross-linking agent may be utilized in forming the dispersion of acrylic copolymer. The cross-linking agent can be a diethylenically unsaturated compound. Examples of the cross-linking agent include, but are not limited to, divinyl benzene, allyl methacrylate, diallyl phthalate, trimethylol propane triacrylate, 1,6-hexanediol diacrylate, ethylene glycol diacrylate, ethylene glycol dimethacrylate, and combinations thereof. Various amounts of the cross-linking agent may be utilized for different applications.

Embodiments of the present disclosure provide that the dispersion of acrylic copolymer can have a solids content from 10 weight percent to 65 weight percent, based upon a total weight of the dispersion of acrylic copolymer. All individual values and subranges from 10 weight percent to 65 weight percent are included; for example, the dispersion of acrylic copolymer can have a solids content from a lower limit of 10, 12, or 15 weight percent to an upper limit of 65, 55, or 45 weight percent based upon the total weight of the dispersion of acrylic copolymer. One or more embodiments provide that the dispersion of acrylic copolymer is an aqueous dispersion.

Embodiments of the present disclosure provide that the dispersion of acrylic copolymer can have a pH of 6 or lower. For instance, the dispersion of acrylic copolymer can have a pH from a lower limit of 1.0, 1.5, or 2.0 to an upper limit of 6.0, 5.7, or 5.5.

The dispersion of acrylic copolymer may be obtained commercially or prepared, e.g. by emulsion polymerization. Examples of commercially available dispersions of acrylic copolymers include those under the tradenames RHOPLEX^{™}, ACRYSOL^{™}, and ACULYN^{™} available from The Dow Chemical Company. Specific examples of commercially available dispersions of acrylic copolymers, where the acrylic copolymer does not include structural units derived from a macromolecular group, are RHOPLEX^{™} ASE-108NP, RHOPLEX^{™} ASE-60, and ACRYSOL^{™} ASE-95NP. Specific examples of commercially available dispersions of acrylic copolymers, where the acrylic copolymer does include structural units derived from a macromolecular group, are ACULYN^{™} 28, ACRYSOL^{™} DR-110, ACRYSOL^{™} TT-615, and ACRYSOL^{™} DR-72.

The dispersions of acrylic copolymer can be prepared from the above-described monomers by conventional emulsion polymerization, for instance. The emulsion polymerization can be performed at a pH of 5.0 or less using free-radical producing initiators, which may be utilized in an amount from 0.01 percent to 5 percent based on a total weight of the monomers, for instance.

Free-radical producing initiators include, but are not limited to peroxygen compounds, 2,2'-azobisisobutyronitrile, and high energy radiation sources. Examples of peroxygen compounds include inorganic persulfate compounds such as ammonium persulfate, potassium persulfate, sodium persulfate; peroxides such as hydrogen peroxide; organic hydroperoxides, for example, cumene hydroperoxide, and t-butyl hydroperoxide; organic peroxides, for example, benzoyl peroxide, acetyl peroxide, lauroyl peroxide, peracetic acid, and perbenzoic acid, which may be activated by a water-soluble reducing agent such as ferrous compound or sodium bisulfite.

The emulsion polymerization can include one or more emulsifiers. Examples of emulsifiers include, but are not limited to anionic surfactants, nonionic surfactants, amphoteric surfactants, and zwitterionic surfactants. Examples of anionic emulsifiers include alkali metal alkyl aryl sulfonates, alkali metal alkyl sulfates, and sulfonated alkyl esters, among others. Specific examples of emulsifiers are sodium dodecylbenzenesulfonate, sodium disecondary-butylnaphthalene sulfonate, sodium lauryl sulfate, disodium dodecyldiphenyl ether disulfonate, disodium n-octadecylsulfosuccinamate and sodium dioctylsulfosuccinate. Examples of nonionic emulsifiers include structures based on polyethylene oxide or oligosaccharides hydrophilic heads, among others. Various amounts or emulsifier may be utilized for different applications.

Optionally, other ingredients known for emulsion polymerizations may be utilized, such as chelating agents, buffering agents, inorganic salts, and pH adjusting agents, among others. Various amounts other ingredients may be utilized for different applications.

As mentioned, the dispersion of acrylic copolymer, e.g., solids from a dispersion of acrylic copolymer, is combined with agricultural water to form an aqueous composition that can be applied to the growth media. As used herein "agricultural water" refers to water that is utilized for plant growth, e.g., plants that provide food and/or fiber. Combining the dispersion of acrylic copolymer and the agricultural water may be performed in any suitable manner, e.g., the dispersion of acrylic copolymer and the agricultural water may be added to a vessel and agitated therein.

The dispersion of acrylic copolymer and the agricultural water is combined such that a concentration of solids from the dispersion of acrylic copolymer is from 50 parts per million to 100,000 parts per million based upon a total weight of the aqueous composition. All individual values and subranges from 50 parts per million to 100,000 are included; for example, the dispersion of acrylic copolymer and agricultural water may be combined such that the concentration of solids from the dispersion of acrylic copolymer is from is from a lower limit of 50, 100, 250, 500, 1,000, 2,000, 5,000, or 10,000 parts per million to an upper limit of 100,000, 75,000, 50,000, 35,000, 25,000, 20,000, or 15,000 parts per million based upon the total weight of the aqueous composition.

Embodiments of the present disclosure provide that the acrylic copolymer can be insoluble in the aqueous composition, e.g., at natural pH. While not wishing to be bound to theory, it is believed that the acrylic copolymer is insoluble in the aqueous composition due to a pH of the aqueous composition. As used herein "insoluble in the aqueous composition" indicates that the acrylic copolymer does not appreciably swell with water, e.g., the acrylic copolymer does not form a gel with the water and/or dissolve. Because the acrylic copolymer is insoluble in the aqueous composition, the aqueous composition advantageously can be stored and/or applied to the growth media at a suitable viscosity, in contrast to some other polymeric materials.

The aqueous composition can have a pH from 1.0 to 6.0. All individual values and subranges from 1.0 to 6.0 are included; for example, the aqueous composition can have a pH from a lower limit of 1.0, 1.5, or 2.0 to an upper limit of 6.0, 5.7, or 5.5.

The aqueous compositions can include an adjunct material. Examples of adjunct materials include, but are not limited to fertilizers, insecticides, herbicides, and/or stabilizers, among others. Various amounts of adjunct material may be utilized for different application. The aqueous compositions can have one or more characteristics such as salinity, electrical conductivity, alkalinity, iron content, and/or pH, among others making the aqueous composition suitable for utilization with a growth media for plants that provide food and/or fiber.

As mentioned, the aqueous composition can be applied to a growth media, e.g., to form a growth media composition. The growth media compositions disclosed herein include a growth media. As used herein, "growth media" refers to material that is utilized for plant growth, e.g., plants that provide food and/or fiber. The growth media may be an agricultural soil, for instance. The growth media may include sand, silt, clay, and/or organic material, for example. Various amounts of sand, silt, clay, and/or organic material may be utilized for different applications.

The growth media compositions can have a concentration of solids from the dispersion of acrylic copolymer that is from 10 parts per million to 50,000 parts per million based upon a total weight of the growth media. All individual values and subranges from 10 parts per million to 50,000 parts per million are included; for example, the growth media composition can include from a lower limit or 10, 20, 25, 50, 100, or 200 parts per million to an upper limit of 50,000, 45,500, 40,000, 35,500, 25,000, 15,000, or 5,000 parts per million of solids from the dispersion of acrylic copolymer based upon the total weight of the growth media.

The growth media compositions can include an adjunct material. Examples of adjunct materials include, but are not limited to fertilizers, insecticides, herbicides, pH adjusting agents, and/or stabilizers, among others. Various amounts of adjunct material may be utilized for different applications.

While not wishing to be bound to theory, it is believed that one or more components of the growth media compositions may neutralize, e.g., increase the pH, components of the dispersion of acrylic copolymer that are applied to the growth media. As the pH is increased the acrylic copolymer can advantageously become water soluble, e.g., the acrylic copolymer swells with water. Once applied to the growth media, solids from the dispersion of acrylic copolymer can help to retain water and/or nutrients in the growth media; provide an improved growth media hardness; provide an improved growth media surface crusting; and/or provide an improved holding of growth media fines. In contrast to other polymeric materials that are applied to agricultural soils, the acrylic copolymer, as discussed herein, has a water insoluble state and a water soluble state, which are believed to be pH dependent.

The growth media composition can have a pH from 6.0 to 11.0. All individual values and subranges from 6.0 to 11.0 are included; for example, the growth media composition can have a pH from a lower limit of 6.0, 6.5, or 7.0 to an upper limit of 11.0, 10.0, 9.0, or 8.0. One or more embodiments of the present disclosure provide that growth media composition can have a pH as low as 5.5.

Some embodiments of the present disclosure are directed toward methods. The methods disclosed herein include combining a dispersion of acrylic copolymer and agricultural water to form an aqueous composition and applying the aqueous composition to a growth media. Applying the aqueous composition to the growth media can form a growth media composition, i.e. the growth media compositions disclosed herein. While not wishing to be bound to theory, because the acrylic copolymers, as discussed herein, are in the water insoluble state in the aqueous composition, the acrylic copolymers will not appreciably swell. This lack of swelling can allow the aqueous composition to have little or no significant viscosity increase, e.g., the viscosity of the aqueous compositions may remain essentially constant. Because there is no significant viscosity increase, the aqueous compositions may be applied to the growth media by processes, e.g., spraying, that could not be effectively utilized with some other polymers that swell in water.

Some embodiments of the present disclosure provide that applying the aqueous composition to a growth media can be a surface treatment. Examples of surface treatments include, but are not limited to, spraying, sprinkling, and/or pouring the aqueous composition on to the growth media. For instance, the aqueous composition may be sprayed on to a surface of the growth media, such as spraying an agricultural field.

Some embodiments of the present disclosure provide that applying the aqueous composition to a growth media can be a bulk treatment. Examples of a bulk treatments include, but are not limited to, mixing the aqueous composition with the growth media, and injecting of the aqueous composition beneath the surface of the growth media.

The methods disclosed herein may be directed toward increasing water retention, reducing growth media hardness, reducing growth media surface crusting, and/or increasing holding of growth media fines, among others.

### EXAMPLES

Growth media (sandy loam M-SL-PF; 63 wt% sand, 18 wt% silt, and 19 wt% clay; obtained from AGVISE Laboratories). The growth media had an organic matter of approximately 2.8 to 3.2 wt%, a cation exchange capacity (CEC) between 20.9 and 24.7, a field capacity between 22.7 and 30.1, and pH between 6.6 and 8.0.

Calcium stock (0.04 M) was formed by mixing calcium chloride (2.21 grams; certified ACS; obtained from Acros Organics) and deionized water (497.7 grams). Magnesium stock (0.04 M) was formed by mixing magnesium chloride hexahydrate crystals (4.05 grams; certified ACS; obtained from Fischer Chemical) and deionized water (495.7 grams). Hard water was formed by mixing the calcium stock (68.5 grams), the magnesium stock (17.0 grams), and MILLI-Q^{®} water (910.6 grams).

Polypropylene cartridges (60 mL; obtained from Applied Separations, catalog #2446) were each cut to a height of 54 mm. Polypropylene centrifuge tubes (50 mL; obtained from Fisher Scientific, catalog #06-443-18) were each cut at the preprinted 27.5 mL mark.

The respective cut cartridges were weighed and growth media was added to each respective cut cartridge; the growth media was gently pressed down in each of the cut cartridges to a height of approximately 28.5 mm.

The cut centrifuge tubes were placed into a holder. The cut cartridges containing the growth media were respectively placed on top of the cut centrifuge tubes.

Comparative Example A, for cycle 1, was prepared as follows. Hard water was added to a cartridge including the growth media to form Comparative Example A. Comparative Example A was weighed to determine an initial weight. Thereafter, Comparative Example A was centrifuged at 1200 rpm for 4 hours and weighed again. Thereafter, Comparative Example A was centrifuged at 4200 rpm for 3 hours and weighed again. Cycle 2 followed cycle 1, where MILLI-Q^{®} water (9 mL) was added to the resultant cartridge and contents from cycle 1. Thereafter, the cycle 2 cartridge and contents were centrifuged and weighed as in cycle 1. Cycle 3 followed cycle 2, where MILLI-Q^{®} water (9 mL) was added to the resultant cartridge and contents from cycle 2. Thereafter, the cycle 3 cartridge and contents were centrifuged and weighed as in cycle 2. Following the weighing the samples after Cycle 3, they were dried for approximately 24 hours at 105 °C, and then weighed again to determine the dry weight. Four replicates were prepared for each sample. Weights of any additive, cartridges, growth media, and hard water are reported in Table 1.

Example 1, an aqueous composition including agricultural water and a dispersion of acrylic copolymer, was prepared as follows. Hard water, e.g., agricultural water, and ACULYN^{™} 28 (dispersion of acrylic copolymer; 20 weight percent solids; obtained from The Dow Chemical Company) were combined in a container to form Example 1. Examples 2-7, aqueous compositions including agricultural water and a dispersion of acrylic copolymer, were prepared as Example 1 with the change that RHOPLEX^{™} ASE-108NP (dispersion of acrylic copolymer; 18 weight percent solids; obtained from The Dow Chemical Company); RHOPLEX^{™} ASE-60 (dispersion of acrylic copolymer; 28 weight percent solids; obtained from The Dow Chemical Company); ACRYSOL^{™} ASE-95NP (dispersion of acrylic copolymer; 18 weight percent solids; obtained from The Dow Chemical Company); ACRYSOL^{™} DR-110 (dispersion of acrylic copolymer; 30 weight percent solids; obtained from The Dow Chemical Company); ACRYSOL^{™} TT-615 (dispersion of acrylic copolymer; 30 weight percent solids; obtained from The Dow Chemical Company); and ACRYSOL^{™} DR-72 (dispersion of acrylic copolymer; 30 weight percent solids; obtained from The Dow Chemical Company) were respectively used in place of ACULYN^{™} 28. Solids from the dispersion of acrylic copolymer based upon a total weight of the respective Example and pH are reported in Table 1.

**Table 1**

| | Dispersion of acrylic copolymer (grams) | PPM of solids from the dispersion of acrylic copolymer based upon a total weight of the Example | pH |
|---|---|---|---|
| Example 1 | 0.0300 (ACULYN^{™} 28) | 5,000 | 4.0 |
| Example 2 | 0.0300 (RHOPLEX^{™} ASE-108NP) | 5,000 | 4.7 |
| Example 3 | 0.0301 (RHOPLEX^{™} ASE-60) | 5,000 | 5.0 |
| Example 4 | 0.0300 (ACRYSOL^{™} ASE-95NP) | 5,000 | 4.3 |
| Example 5 | 0.0300 (ACRYSOL^{™} DR-110) | 5,000 | 5.0 |
| Example 6 | 0.0300 (ACRYSOL^{™} TT-615) | 5,000 | 4.5 |
| Example 7 | 0.0301 (ACRYSOL^{™} DR-72) | 5,000 | 5.0 |

Example 8, a composition including the growth media and solids from a dispersion of acrylic copolymer, was prepared as follows for cycle 1. Example 1 was added to a cartridge including the growth media to form Example 8. Example 8 was weighed to determine an initial weight. Thereafter, Example 8 was centrifuged at 1200 rpm for 4 hours. Thereafter, Example 8 was centrifuged at 4200 rpm for 3 hours. Cycle 2 followed cycle 1, where MILLI-Q^{®} water (9 mL) was added to the resultant cartridge and contents from cycle 1. Thereafter, the cycle 2 cartridge and contents were centrifuged and weighed as in cycle 1. Cycle 3 followed cycle 2, where MILLI-Q^{®} water (9 mL) was added to the resultant cartridge and contents from cycle 2. Thereafter, the cycle 3 cartridge and contents were centrifuged and weighed as in cycle 2. Afterwards the samples were dried for approximately for 24 hours at 150 °C and then weighed again to determine the weight of the solids, which was used to determine the weight of the water left in the cartridge after each cycle. Four replicates were performed for each sample, which are labeled as Run 1-4. Weights of any additive, cartridges, growth media, and hard water are reported in Table 2.

Examples 9-14 were prepared as Example 8, with the change that Examples 2-7 were respectively used in place of Example 1. Weights of any additive, cartridges, growth media, and hard water are reported in Table 2. The pH of each of Examples 8-14 and Comparative Example A were in the range from 7.0 to 7.5.

**Table 2**

| | Dispersion of acrylic copolymer (grams) | Cartridge (grams) | Growth media (grams) | Hard Water (grams) |
|---|---|---|---|---|
| Comparative Example A Replicate 1 Cycle 1 | - | 9.7959 | 12.9722 | 6.0024 |
| Comparative Example A Replicate 2 Cycle 1 | - | 9.7498 | 12.9687 | 6.0018 |
| Comparative Example A Replicate 3 Cycle 1 | - | 8.0295 | 12.9684 | 6.0003 |
| Comparative Example A Replicate 4 Cycle 1 | - | 9.8770 | 12.9655 | 6.0048 |
| Example 8 Replicate 1 Cycle 1 | 0.0300 (ACULYN^{™} 28) | 8.0541 | 12.9729 | 6.0020 |
| Example 8 Replicate 2 | 0.0301 (ACULYN^{™} 28) | 8.0605 | 12.9677 | 6.0155 |
| Cycle 1 | | | | |
| Example 8 Replicate 3 Cycle 1 | 0.0300 (ACULYN^{™} 28) | 9.7614 | 12.9715 | 6.0043 |
| Example 8 Replicate 4 Cycle 1 | 0.0300 (ACULYN^{™} 28) | 9.8509 | 12.9729 | 6.0025 |
| Example 9 Replicate 1 Cycle 1 | 0.0300 (RHOPLEX^{™} ASE-108NP) | 9.8667 | 12.9719 | 6.0006 |
| Example 9 Replicate 2 Cycle 1 | 0.0300 (RHOPLEX^{™} ASE-108NP) | 7.9534 | 12.9736 | 6.0001 |
| Example 9 Replicate 3 Cycle 1 | 0.0300 (RHOPLEX^{™} ASE-108NP) | 8.0694 | 12.9727 | 6.0018 |
| Example 9 Replicate 4 Cycle 1 | 0.0300 (RHOPLEX^{™} ASE-108NP) | 9.8292 | 12.9691 | 6.0015 |
| Example 10 Replicate 1 Cycle 1 | 0.0301 (RHOPLEX^{™} ASE-60) | 9.8355 | 12.9681 | 6.0118 |
| Example 10 Replicate 2 Cycle 1 | 0.0300 (RHOPLEX^{™} ASE-60) | 9.7908 | 12.9685 | 5.9996 |
| Example 10 Replicate 3 Cycle 1 | 0.0300 (RHOPLEX^{™} ASE-60) | 9.8512 | 12.9698 | 6.0043 |
| Example 10 Replicate 4 Cycle 1 | 0.0300 (RHOPLEX^{™} ASE-60) | 8.0523 | 12.9731 | 5.9990 |
| Example 11 Replicate 1 Cycle 1 | 0.0300 (ACRYSOL^{™} ASE-95NP) | 9.7859 | 12.9722 | 6.0022 |
| Example 11 Replicate 2 Cycle 1 | 0.0300 (ACRYSOL^{™} ASE-95NP) | 9.6169 | 12.9697 | 6.0011 |
| Example 11 Replicate 3 Cycle 1 | 0.0300 (ACRYSOL^{™} ASE-95NP) | 8.0210 | 12.9664 | 6.0008 |
| Example 11 Replicate 4 Cycle 1 | 0.0300 (ACRYSOL^{™} ASE-95NP) | 8.0795 | 12.9670 | 6.0019 |
| Example 12 Replicate 1 Cycle 1 | 0.0300 (ACRYSOL^{™} DR-110) | 9.8714 | 12.9718 | 6.0072 |
| Example 12 Replicate 2 Cycle 1 | 0.0300 (ACRYSOL^{™} DR-110) | 9.5866 | 12.9675 | 6.0000 |
| Example 12 Replicate 3 Cycle 1 | 0.0300 (ACRYSOL^{™} DR-110) | 9.6362 | 12.9736 | 6.0023 |
| Example 12 Replicate 4 Cycle 1 | 0.0300 (ACRYSOL^{™} DR-110) | 9.8608 | 12.9687 | 5.9997 |
| Example 13 Replicate 1 Cycle 1 | 0.0300 (ACRYSOL^{™} TT-615) | 8.1029 | 12.9675 | 6.0028 |
| Example 13 Replicate 2 Cycle 1 | 0.0300 (ACRYSOL^{™} TT-615) | 9.7021 | 12.9701 | 5.9998 |
| Example 13 Replicate 3 Cycle 1 | 0.0300 (ACRYSOL^{™} TT-615) | 9.8199 | 12.9678 | 6.0034 |
| Example 13 Replicate 4 Cycle 1 | 0.0300 (ACRYSOL^{™} TT-615) | 9.8399 | 12.9729 | 6.0057 |
| Example 14 Replicate 1 Cycle 1 | 0.0301 (ACRYSOL^{™} DR-72) | 9.8758 | 12.9726 | 6.0115 |
| Example 14 Replicate 2 Cycle 1 | 0.0301 (ACRYSOL^{™} DR-72) | 8.0207 | 12.9685 | 6.0133 |
| Example 14 Replicate 3 Cycle 1 | 0.0300 (ACRYSOL^{™} DR-72) | 9.7660 | 12.9740 | 6.0012 |
| Example 14 Run 4 Cycle 1 | 0.0300 (ACRYSOL^{™} DR-72) | 9.8003 | 12.9662 | 6.0027 |

For each replicate of each cycle performed, an amount of water retained following centrifuging was determined by weighing the sample after the centrifuge, oven drying, and weighing again. Alternatively, the amount of water can be determined by measuring the moisture of the soil with a moisture analyzer and subtracting the weight of the container, calculated dry soil weight and added additive weight from the post-centrifuge weight. For each replicate of each cycle performed for Examples 8-14 and Comparative Example A, an amount of water retained and the change in the percentage of water retained vs Comparative Example A was calculated. The results are reported in Table 3.

**Table 3**

| | Cycle 1 | | Cycle 2 | | Cycle 3 | |
|---|---|---|---|---|---|---|
| | Water retained (grams) | Change in percentage of water retained vs Comparative Example A | Water retained (grams) | Change in percentage of water retained vs Comparative Example A | Water retained (grams) | Change in percentage of water retained vs Comparative Example A |
| Comparative Example A Replicate 1 | 2.7921 | - | 2.8538 | - | 2.9066 | - |
| Comparative | 2.7893 | - | 2.8554 | - | 2.9102 | - |
| Example A Replicate 2 | | | | | | |
| Comparative Example A Replicate 3 | 2.7794 | - | 2.8406 | - | 2.9052 | - |
| Comparative Example A Replicate 4 | 2.8091 | - | 2.8722 | - | 2.9246 | - |
| Example 8 Replicate 1 | 3.0806 | +10.2830 | 3.1006 | +8.5491 | 3.1340 | +7.6025 |
| Example 8 Replicate 2 | 3.0992 | +10.9940 | 3.1131 | +9.0310 | 3.1450 | +8.0241 |
| Example 8 Replicate 3 | 3.1094 | +11.3249 | 3.1379 | +9.8657 | 3.1547 | +8.3238 |
| Example 8 Replicate 4 | 3.1466 | +12.6454 | 3.1796 | +11.3144 | 3.2031 | +9.9746 |
| Example 9 Replicate 1 | 2.8980 | +3.7523 | 2.9426 | +3.0238 | 2.9627 | +1.7272 |
| Example 9 Replicate 2 | 2.8872 | +3.3509 | 2.9343 | +2.7186 | 2.9577 | +1.5411 |
| Example 9 Replicate 3 | 2.9036 | +3.9471 | 2.9406 | +2.9482 | 2.9694 | +1.9517 |
| Example 9 Replicate 4 | 2.9237 | +4.6971 | 2.9595 | +3.6400 | 2.9799 | +2.3419 |
| Example 10 Replicate 1 | 2.9275 | +4.8409 | 2.9564 | +3.5390 | 2.9761 | +2.2189 |
| Example 10 Replicate 2 | 2.9263 | +4.7918 | 2.9567 | +3.5436 | 2.9734 | +2.1203 |
| Example 10 Replicate 3 | 2.9193 | +4.5336 | 2.9494 | +3.2804 | 2.9665 | +1.8759 |
| Example 10 Replicate 4 | 2.8860 | +3.3129 | 2.9098 | +1.8658 | 2.9415 | +0.9898 |
| Example 11 Replicate 1 | 2.9339 | +5.0366 | 2.9826 | +4.4233 | 3.0067 | +3.2370 |
| Example 11 Replicate 2 | 2.9293 | +4.8924 | 2.9708 | +4.0305 | 2.9904 | +2.6974 |
| Example 11 Replicate 3 | 2.9296 | +4.9295 | 2.9780 | +4.3088 | 3.0013 | +3.0976 |
| Example 11 Replicate 4 | 2.9386 | +5.2465 | 2.9847 | +4.5382 | 3.0145 | +3.5459 |
| Example 12 Replicate 1 | 2.9734 | +6.4543 | 3.0040 | +5.1761 | 3.0255 | +3.8860 |
| Example 12 Replicate 2 | 2.9727 | +6.4632 | 3.0004 | +5.0836 | 3.0203 | +3.7406 |
| Example 12 Replicate 3 | 2.9094 | +4.1490 | 2.9619 | +3.6881 | 2.9905 | +2.6704 |
| Example 12 Replicate 4 | 2.9151 | +4.3903 | 2.9716 | +4.0649 | 2.9991 | +3.0025 |
| Example 13 Replicate 1 | 2.8937 | +3.6335 | 2.9322 | +2.6945 | 2.9652 | +1.8476 |
| Example 13 Replicate 2 | 2.9341 | +5.0601 | 2.9787 | +4.3030 | 3.0014 | +3.0711 |
| Example 13 Replicate 3 | 2.9437 | +5.4234 | 2.9845 | +4.5255 | 3.0055 | +3.2310 |
| Example 13 | 2.9354 | +5.0844 | 2.9613 | +3.6717 | 2.9870 | +2.5549 |
| Replicate 4 | | | | | | |
| Example 14 Replicate 1 | 2.9358 | +5.1019 | 2.9738 | +4.1125 | 2.9994 | +2.9837 |
| Example 14 Replicate 2 | 2.8989 | +3.8117 | 2.9281 | +2.5431 | 2.9710 | +2.0390 |
| Example 14 Replicate 3 | 2.9746 | +6.4784 | 3.0191 | +5.6860 | 3.0427 | +4.4581 |
| Example 14 Replicate 4 | 2.9683 | +6.3157 | 3.0187 | +5.7345 | 3.0423 | +4.5062 |

The data of Table 3 illustrates that for replicates 1-4 of cycles 1-3, Examples 8-14 advantageously had an improved, i.e. increased, water retention as compared to Comparative Example A.

Growth media hardness. Comparative Example B was prepared as follows. Growth media (50 g), described above, was added to cylindrical container that allowed for liquid drainage. Deionized water (20 mL) was added to the growth media; one week later, deionized water (100 mL) was added to the growth media, excess water drained from the container and collected in a collection container; after 24 hours more deionized water (100 mL) was added to the growth media, excess water drained from the container and collected in the collection container; after another 24 hours more deionized water (100 mL) was added to the growth media, excess water drained from the container and collected in the collection container; thereafter the growth media was dried at ambient conditions for 1 week. After 1 week, growth media hardness was measured with a soil pocket penetrometer obtained from Certified Material Testing Products. The results are reported in Table 4.

Comparative Example C was prepared as Comparative Example B with the change that RESERVOIR^{®} DG (soil additive; obtained from HELENA^{®}) was added (500 ppm based upon a total weight of the growth media and 20 mL of deionized water; the RESERVOIR^{®} DG was added as a solid followed by the 20 mL of deionized water) to the growth media one week prior any addition of further deionized water to the growth media. The results are reported in Table 4.

Examples 15-16 were prepared as Comparative Example B with the change that ACULYN^{™} 28 (20 mL of ACULYN^{™} 28 and deionized water; Example 15: 500 ppm ACULYN^{™} 28 based upon a total weight of the ACULYN^{™} 28 and deionized water; Example 16: 1000 ppm ACULYN^{™} 28 based upon a total weight of the ACULYN^{™} 28 and deionized water) was utilized rather than the polyacrylamide. The results are reported in Table 4.

**Table 4**

| | Additive | Growth media hardness (kg/cm²) |
|---|---|---|
| Example 15 | ACULYN^{™} 28 (500 ppm) | 0.75 |
| Example 16 | ACULYN^{™} 28 (1000 ppm) | 0.75 |
| Comparative Example B | Deionized water only | 2.00 |
| Comparative Example C | RESERVOIR^{®} DG (500 ppm) | 1.25 |

The data of Table 4 illustrates that each of Example 15 and Example 16 provide improved, i.e., reduced, growth media hardness as compared to both Comparative Example B and Comparative Example C.

Holding of growth media fines was determined by visual inspection of drainage collected in the respective collection containers. The results are reported in Table 5.

**Table 5**

| | Additive | Visual Inspection of collected drainage |
|---|---|---|
| Example 15 | ACULYN^{™} 28 (500 ppm) | Clear |
| Example 16 | ACULYN^{™} 28 (1000 ppm) | Clear |
| Comparative Example B | Deionized water only | Yellowish, Cloudy |
| Comparative Example C | RESERVOIR^{®} DG (500 ppm) | Yellowish, Cloudy |

The data of Table 5 illustrates that each of Example 15 and Example 16 provide improved, i.e., increased, holding of growth media fines as compared to both Comparative Example B and Comparative Example C. The cloudy appearance of collected drainage for Comparative Example B and Comparative Example C indicates that fines, at a concentration to be visually perceived, were present in the respective collected drainages. The clear appearance of collected drainage for Example 15 and Example 16 indicates that fines, at a concentration to be visually perceived, were not present in the respective collected drainages.

## Claims

1. An aqueous composition comprising:
agricultural water; and
solids from a dispersion of acrylic copolymer,
wherein the acrylic copolymer includes structural units derived from an acrylic acid monomer, structural units derived from acrylic ester monomer and structural units derived from a macromolecular group,
and wherein solids from the dispersion of acrylic copolymer is from 50 parts per million to 100,000 parts per million based upon a total weight of the aqueous composition; wherein said acrylic acid monomer is a mono-ethylenically unsaturated carboxylic acid monomer or is selected from the group consisting of itaconic acid, fumaric acid, crotonic acid, acrylic acid, methacrylic acid, maleic acid, acryloxypropionic acid, citraconic acid, and combinations thereof,
wherein said acrylic ester monomer is selected from the group consisting of esters of 2-propenoic acid, 2-methylpropenoic acid, and combinations thereof, or from the group consisting of Ci-Cs alkyl acrylates and/or C₁-C₈ alkyl methacrylates, or from the group consisting of methyl acrylate, ethyl acrylate, butyl acrylate, 2-ethylhexyl acrylate, methyl methacrylate, ethyl methacrylate, butyl methacrylate, and combinations thereof;
and wherein said macromolecular group is represented by either of the following structures:
R^{a}-(OR^{b})ₓ-(OR^{c})_{y}-OC(O)-CR^{d}=CH₂
or
R^{a}-(OR^{b})ₓ-(OR^{c})_{y}-OC(O)-NH-C(CH₃)₂-(Ph)-CR^{d}=CH₂,
where R^{a} is a C₈-C₂₄ alkyl or aralkyl group, x + y is 3 to 100, R_{b} and R_{c} are each independently CH₂CH₂, CH₂CH(CH₃), or CH₂CH₂CH₂CH₂, R^{d} is H or C₁-C₆ alkyl, and Ph is a phenylene group.

2. The aqueous composition of claim 1, wherein the dispersion of acrylic copolymer is from 10 weight percent to 55 weight percent solids based upon a total weight of the dispersion of acrylic copolymer.

3. The aqueous composition of claim 1 or claim 2, wherein x + y is 10 to 100 or is 10 to 50.

4. The aqueous composition of any of claims 1 to 3, wherein R_{b} and R_{c} are both CH₂CH₂.

5. The aqueous composition of any of claims 1 to 4, where R^{d} is methyl.

6. A growth media composition comprising:
a growth media, wherein the growth media is an agricultural soil; and
solids from the aqueous composition of any one of claims 1-5.

7. The growth media composition of claim 6, wherein a concentration of solids from the dispersion of acrylic copolymer is from 10 parts per million to 50,000 parts per million based upon a total weight of the growth media.

8. A method comprising:
combining solids from a dispersion of acrylic copolymer and agricultural water to form an aqueous composition; and
applying the aqueous composition to a growth media,
wherein the aqueous composition is as defined in any of claims 1-5.

9. The method of claim 8, wherein applying the aqueous composition to the growth media comprises a surface treatment.

10. The method of claim 8, wherein applying the aqueous composition to the growth media comprises a bulk treatment.

## Patentansprüche

1. Wässrige Zusammensetzung, umfassend:
landwirtschaftliches Wasser; und
Feststoffe aus einer Dispersion von Acrylcopolymer,
wobei das Acrylcopolymer Struktureinheiten einschließt, die von einem Acrylsäuremonomer abgeleitet sind, Struktureinheiten, die von einem Acrylestermonomer abgeleitet sind, und Struktureinheiten, die von einer makromolekularen Gruppe abgeleitet sind,
und wobei die Feststoffe aus der Dispersion von Acrylcopolymer von 50 ppm bis 100.000 ppm betragen, bezogen auf das Gesamtgewicht der wässrigen Zusammensetzung;
wobei das Acrylsäuremonomer ein monoethylenisch ungesättigtes Carbonsäuremonomer ist oder aus der Gruppe ausgewählt ist, die aus Itaconsäure, Fumarsäure, Crotonsäure, Acrylsäure, Methacrylsäure, Maleinsäure, Acryloxypropionsäure, Citraconsäure und Kombinationen davon besteht,
wobei das Acrylestermonomer ausgewählt ist aus der Gruppe, bestehend aus Estern von 2-Propensäure, 2-Methylpropensäure und Kombinationen davon, oder aus der Gruppe, bestehend aus C₁-C₈-Alkylacrylaten und/oder C₁-C₈-Alkylmethacrylaten, oder aus der Gruppe, bestehend aus Methylacrylat, Ethylacrylat, Butylacrylat, 2-Ethylhexylacrylat, Methylmethacrylat, Ethylmethacrylat, Butylmethacrylat und Kombinationen davon;
und wobei die makromolekulare Gruppe durch eine der folgenden Strukturen dargestellt wird:
R^{a}-(OR^{b})ₓ-(OR^{c})_{y}-OC(O)-CR^{d}=CH₂
oder
R^{a}-(oR^{b})ₓ-(OR^{c})_{y}-OC(O)-NH-C(CH₃)₂-(Ph)-CR^{d}=CH₂,
wobei R^{a} eine C₈-C₂₄-Alkyl- oder -Aralkylgruppe ist, x + y 3 bis 100 ist, R_{b} und R_{c} jeweils unabhängig voneinander CH₂CH₂, CH₂CH(CH₃) oder CH₂CH₂CH₂CH₂, sind, R^{d} H oder C₁-C₆-Alkyl ist, und Ph eine Phenylengruppe ist.

2. Wässrige Zusammensetzung nach Anspruch 1, wobei die Dispersion von Acrylcopolymer von 10 Gewichtsprozent bis 55 Gewichtsprozent Feststoffe enthält, bezogen auf das Gesamtgewicht der Dispersion von Acrylcopolymer.

3. Wässrige Zusammensetzung nach Anspruch 1 oder Anspruch 2, wobei x + y 10 bis 100 oder 10 bis 50 beträgt.

4. Wässrige Zusammensetzung nach einem der Ansprüche 1 bis 3, wobei R_{b} und R_{c} beide CH₂CH₂ sind.

5. Wässrige Zusammensetzung nach einem der Ansprüche 1 bis 4, wobei R^{d} Methyl ist.

6. Wachstumsmediumzusammensetzung, umfassend:
ein Wachstumsmedium, wobei das Wachstumsmedium ein landwirtschaftlicher Boden ist; und
Feststoffe aus der wässrigen Zusammensetzung nach einem der Ansprüche 1 bis 5.

7. Wachstumsmediumzusammensetzung nach Anspruch 6, wobei eine Konzentration der Feststoffe aus der Dispersion von Acrylcopolymer von 10 ppm bis 50.000 ppm beträgt, bezogen auf das Gesamtgewicht des Wachstumsmediums.

8. Verfahren, umfassend:
Kombinieren von Feststoffen aus einer Dispersion eines Acrylcopolymers und landwirtschaftlichen Wassers zur Bildung einer wässrigen Zusammensetzung; und
Aufbringen der wässrigen Zusammensetzung auf ein Wachstumsmedium,
wobei die wässrige Zusammensetzung wie in einem der Ansprüche 1 bis 5 definiert ist.

9. Verfahren nach Anspruch 8, wobei das Aufbringen der wässrigen Zusammensetzung auf das Wachstumsmedium eine Oberflächenbehandlung umfasst.

10. Verfahren nach Anspruch 8, wobei das Aufbringen der wässrigen Zusammensetzung auf das Wachstumsmedium eine Massenbehandlung umfasst.

## Revendications

1. Composition aqueuse comprenant :
de l'eau agricole ; et
des solides d'une dispersion de copolymère acrylique,
dans laquelle le copolymère acrylique comporte des unités structurelles dérivées d'un monomère d'acide acrylique, des unités structurelles dérivées d'un monomère d'ester acrylique et des unités structurelles dérivées d'un groupe macromoléculaire,
et dans laquelle les solides de la dispersion du copolymère acrylique sont compris entre 50 parties par million et 100 000 parties par million par rapport au poids total de la composition aqueuse ;
dans laquelle ledit monomère d'acide acrylique est un monomère d'acide carboxylique mono-éthyléniquement insaturé ou est choisi dans le groupe constitué d'acide itaconique, acide fumarique, acide crotonique, acide acrylique, acide méthacrylique, acide maléique, acide acryloxypropionique, acide citraconique et combinaisons de ceux-ci,
dans laquelle ledit monomère d'ester acrylique est choisi dans le groupe constitué d'esters d'acide 2-propénoïque, d'acide 2-méthylpropénoïque et des combinaisons de ceux-ci, ou dans le groupe constitué d'acrylates d'alkyle en C₁ à C₈ et/ou de méthacrylates d'alkyle en C₁ à C₈, ou dans le groupe constitué d'acrylate de méthyle, acrylate d'éthyle, acrylate de butyle, acrylate de 2-éthylhexyle, méthacrylate de méthyle, méthacrylate d'éthyle, méthacrylate de butyle et des combinaisons de ceux-ci ;
et dans laquelle ledit groupe macromoléculaire est représenté par l'une des structures suivantes :
R^{a}-(OR^{b})ₓ-(OR^{c})_{y}-OC(O)-CR^{d}=CH₂
ou
R^{a}-(OR^{b})ₓ-(OR^{c})_{y}-OC(O)-NH-C(CH₃)₂-(Ph)-CR^{d}=CH₂,
où R^{a} est un groupe alkyle ou aralkyle en C₈ en C₂₄, x + y est compris entre 3 et 100, R_{b} et R_{c} sont chacun indépendamment CH₂CH₂, CH₂CH(CH₃), or CH₂CH₂CH₂CH₂, R^{d} est H ou alkyle en C₁ en C₆, et Ph est un groupe phénylène.

2. Composition aqueuse selon la revendication 1, dans laquelle la dispersion de copolymère acrylique est de 10 % en poids à 55 % en poids de solides par rapport au poids total de la dispersion de copolymère acrylique.

3. Composition aqueuse selon la revendication 1 ou la revendication 2, dans laquelle x + y est compris entre 10 et 100 ou entre 10 et 50.

4. Composition aqueuse selon l'une quelque chose des revendications 1 à 3, dans laquelle R_{b} et R_{b} sont tous deux CH₂CH₂.

5. Composition aqueuse selon l'une quelconque des revendications 1 à 4, dans laquelle R^{d} est du méthyle.

6. Composition de milieu de croissance comprenant :
un milieu de croissance, dans laquelle le milieu de croissance est un sol agricole ; et
des solides de la composition aqueuse selon l'une quelconque des revendications 1 à 5.

7. Composition de milieu de croissance selon la revendication 6, dans laquelle une concentration de solides provenant de la dispersion de copolymère acrylique est comprise entre 10 parties par million et 50 000 parties par million sur la base d'un poids total du milieu de croissance.

8. Procédé comprenant :
la combinaison des solides d'une dispersion de copolymère acrylique et de l'eau agricole pour former une composition aqueuse ; et
l'application de la composition aqueuse à un milieu de croissance,
dans lequel la composition aqueuse est telle que définie selon l'une quelconque des revendications 1 à 5.

9. Procédé selon la revendication 8, dans lequel l'application de la composition aqueuse au milieu de croissance comprend un traitement de surface.

10. Procédé selon la revendication 8, dans lequel l'application de la composition aqueuse au milieu de croissance comprend un traitement en vrac.
